# EUROPEAN PATENT APPLICATION

(11) **EP 1 746 805 A1**
(43) Date of publication of application: **24.01.2007**
(21) Application number: 06014966.3
(22) Date of filing: 18.07.2006
(51) Int. Cl.: H04L 29/08, H04L 12/56

(54) **Apparatus and method for obtaining application data from short distance communication terminal**

(30) Priority: 20.07.2005 KR 20050065866
(71) Applicant: LG Electronics Inc., Yongdungpo-Gu Seoul (KR)
(72) Inventor: Kim, Minjung, Seoul 153-856 (KR); Lee, Cheolsook, Seoul 143-853 (KR)
(74) Representative: Katérle, Axel

(57) **Abstract**

An apparatus and a method for obtaining application data from the short distance communication terminal enables a first terminal to obtain application data from a second terminal in a short time. The apparatus includes a SDP standard record memory and a SDP extension record memory. The SDP standard record memory stores a SDP standard record including application data that are defined as standards in a Bluetooth communication, and the SDP extension record memory stores a SDP extension record including application data that are not defined as standards in the Bluetooth communication. A SDP server reads the SDP standard record and the SDP extension record, respectively stored in the SDP standard record memory and the SDP extension record memory, if a SDP search request signal is received, and transmits the read SDP standard record and SDP extension record to extract application data.

## Description

### CLAIM FOR PRIORITY

This application is based on and claims priority to Korean Patent Application No. 10-2005-0065866 filed on July 20, 2005 in the Korean Intellectual Property Office (KIPO), the entire content of which is hereby incorporated by reference.

### BACKGROUND

This description generally relates to an apparatus and a method for obtaining application data from a short distance communication terminal which enables a first terminal to obtain application data from a second terminal by connecting the first terminal with the second terminal via short distance communication.

A wireless personal area network (WPAN) is a communication network for enabling a small number of terminals to perform communication mutually using a wireless channel at a short distance within about 10 meters. A key concept in WPAN technology has been known as ultra wide band (UWB) communication, Bluetooth, wireless local area network (WLAN), Zigbee, infrared data association (IrDA), and others.

The WPAN has been widely used for substituting wireless communication for wire communication of the terminals that are located within the short distance. Accordingly, the scope of application of the WPAN is expected to be broadened.

Recently, the Bluetooth spotlighted as a typical short distance communication technology has been continuously developed since the Bluetooth standard version 1.0 was announced as an official standard by Bluetooth Special Interest Group (SIG) (Ericcson, Nokia, IBM, Toshiba and Intel). IEEE 802.15 Working Group was formed as an official group for international standards, and has been closely worked together with SIG for the purpose of establishing international standards based on the Bluetooth standard.

The Bluetooth version 1.0 provides a data transfer rate up to 1 Mbps. Considering a header of a packet, an effective data transfer rate is up to 723.2 kbps in one direction, 57.6 kbps in the other direction, and 433.9 kbps in both directions. A transmission distance is within about 10m in 1mW transmit power, and the transmit power is prescribed up to 100mW.

The Bluetooth sets 79 channels each having a bandwidth of 1MHz in an industrial scientific medical(ISM) frequency band of 2.4000-2.4835GHz that can be used by users without licenses, and transmits data while changing channels about 1,600 times per second in a frequency hopping spread spectrum.

The Bluetooth can accurately transmit data in a wireless environment with heavy noises by using the frequency hopping spread spectrum and can avoid a frequency interference by transmitting/receiving a predetermined packet and hopping the packet on a frequency of a new channel. Therefore, the Bluetooth can perform hopping more quickly in the same frequency band, in comparison with other systems, and transmit data more stably using a shorter packet.

As the short distance communication unit such as the Bluetooth has been mounted to a first terminal such as a mobile communication terminal and a second terminal such as an access point, the first terminal can receive a desired service including all sorts of applications from the second terminal by connecting with the second terminal via the short distance communication.

For example, the access point (i.e., second terminal) is installed in each home and office, and applications supplied from the access point include a function for connecting a wire telephone network. In addition, the first terminal performs the short distance communication with the access point, so that a user can talk over the first terminal via the wire telephone network through the access point.

If the first terminal is connected to the second terminal supplying predetermined applications via the short distance communication to receive services of the applications from the second terminal, the first terminal receives application data from the second terminal so that the user can check the data.

### SUMMARY

Accordingly, the present invention has been made to solve the above-mentioned problems occurring in the prior art.

An object of the present invention is to provide an apparatus and a method for obtaining application data from a short distance communication terminal that enables a first terminal to obtain application data from a second terminal in a short time.

Another object of the present invention is to provide an apparatus and a method for obtaining application data from a short distance communication terminal that enable a user of the first terminal to search for the second terminal supplying a desired application in a short time.

Additional advantages, objects and features of the invention will be set forth in part in the description which follows and in part will become apparent to those having ordinary skill in the art upon examination of the following or may be learned from practice of the invention.

According to the present invention, the first and second terminals include a service discovery protocol (SDP) extension record memory and a SDP standard record memory, respectively. The SDP extension record memory stores the SDP extension record including data of all sorts of applications that are not defined as standards in the Bluetooth. The SDP standard record memory stores SDP standard record including data of all sorts of applications that are defined as standards in the Bluetooth.

If the first terminal obtains application data from the second terminal, the first terminal searches for the second terminals via the short distance communication, and selects the second searched terminals one by one. In addition, the first terminal transmits a SDP search request signal to the second selected terminal, and the second terminal reads the SDP extension record and the SDP standard record from the SDP extension record memory and the SDP standard record memory according to the search request signal so as to be transmitted to the first terminal. The first terminal performs filtering of the SDP extension record and the SDP standard record, which are respectively received from the second terminal according to the SDP search request signal, to extract the application data.

According to an aspect of the present invention, there is provided an apparatus for obtaining application data from a short distance communication terminal that includes: a SDP extension record memory configured to store a SDP extension record including application data that are not defined as standards in the short distance communication; a SDP standard record memory configured to store a SDP standard record including application data that are defined as standards in the short distance communication; a short distance communication unit configured to perform a short distance communication; a SDP client configured to search for a terminal through the short distance communication unit and obtain information including application data from the searched terminal, when a search command is inputted from the application through a manager; and a SDP server configured to read the SDP extension record and the SDP standard record, which are respectively stored in the SDP extension record memory and the SDP standard record memory, so as to be transmitted through the short distance communication unit, when the SDP search request signal is received through the short distance communication unit.

According to another aspect of the present invention, there is provided a method for obtaining application data from a short distance communication terminal, which includes: a SDP client of a first terminal searching for a second terminal to transmit a SDP search request signal; receiving a SDP standard record and a SDP extension record from the second terminal according to the SDP search request signal; and extracting application data from the received SDP standard record and SDP extension record.

### BRIEF DESCRIPTION OF THE DRAWINGS

FIGS. 1 to 4 are diagrams for explaining operations for a first terminal searching for second terminals.
FIG. 5 is a signal flow chart illustrating an operation for the first terminal obtaining application data from the second terminal.
FIG. 6 is a block diagram illustrating the constitution of the first and second terminals of an application data obtaining apparatus according to an exemplary embodiment of the present invention.
FIG. 7 is a signal flow chart illustrating an application data obtaining method according to the exemplary embodiment of the present invention.

### DETAILED DESCRIPTION

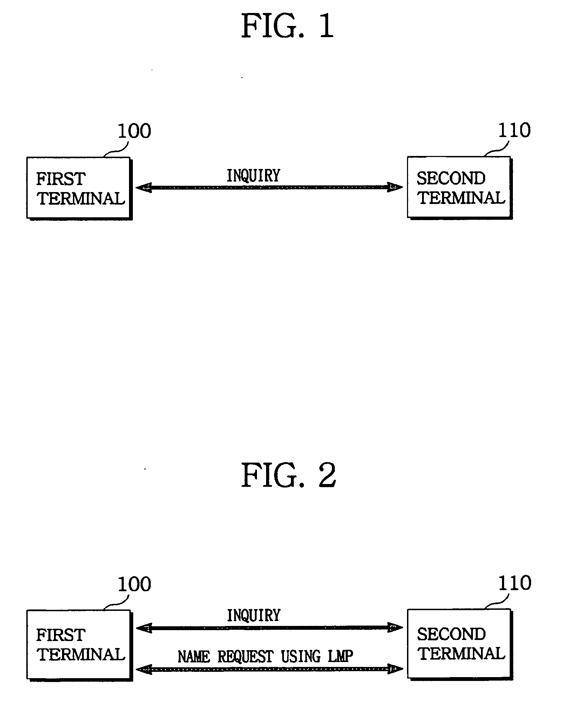

Referring to FIG. 1, if a first terminal 100 connects with a second terminal 110 via the short distance communication, the first terminal 100 performs an inquiry. The inquiry repeatedly performs an operation for enabling the first terminal 100 to transmit an inquiry message and wait for a response to the transmitted inquiry message.

The second terminal 110 performs an inquiry scan to receive an inquiry message transmitted from the first terminal 100. If the inquiry message is received from the first terminal 100, the second terminal 110 stands by for 0-640ms, and if the inquiry message is received again, the second terminal performs an inquiry response. The inquiry response enables the second terminal 110 to transmit a frequency hopping synchronization (FHS) packet to the first terminal 100.

The inquiry response is performed using an inquiry access code, so as to enable all the second terminals 110 located in a short distance communication area of the first terminal 100 to receive the inquiry message. If the second terminals 110 are located in the short distance communication area of the first terminal 100 to perform the inquiry scan, all the second terminals 110 receive the inquiry message. In this time, if the second terminals 110 transmit inquiry responses immediately, the plurality of inquiry responses is collided with each other. Accordingly, the second terminals 110 performs the inquiry response after standing by for 0-640ms, so that the inquiry responses are not collided with each other and may be received by the first terminal 100.

The first terminal 100, which has performed the inquiry, recognizes information of the second terminal 110 that has transmitted the inquiry response, namely, address information on the second terminal 110.

However, the inquiry enables the first terminal 100 to merely obtain the address information of the second terminal 110, and does not enable application data to be obtained from the second terminal 110.

As shown in FIG. 2, after the first and second terminals 100 and 110 perform the inquiry, the first terminal 100 may obtain a name of the second terminal 110 through a link manager protocol (LMP).

However, using the LMP, the first terminal 100 can merely obtain information on the name of the second terminal 110, and cannot obtain application from the second terminal 110.

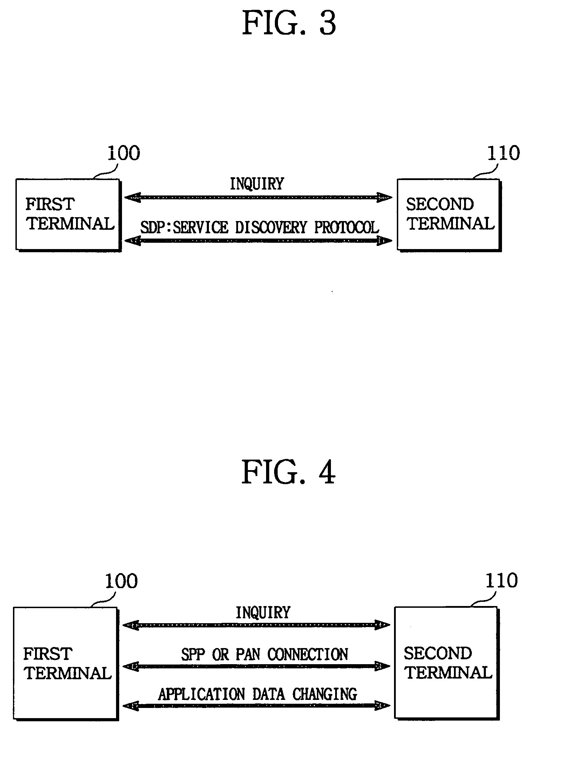

In an application data obtaining method, as shown in FIG. 3, the first and second terminals 100 and 110 must perform a SDP search, after the inquiry.

In the search using the SDP, the first and second terminals 100 and 110 can obtain application data defined in the Bluetooth standards, after being connected with each other via a logical link control and adaptation protocol (L2CAP). The applications defined in the Bluetooth standards are, for example, a headset, a walky-talky, and others.

In the search using the SDP, the first terminal 100 can obtain application data from the second terminal 110 in a short time. However, the application data to be obtained are only application data defined in the Bluetooth standards, not application data that are not defined in the Bluetooth standards.

As shown in FIG. 4, in order to enable the first terminal 100 to obtain application data that are not defined in the standards of the Bluetooth from the second terminal 110, the first and second terminals 100 and 110 must perform the inquiry and exchange application data with each other, after executing a service connection via a serial port profile (SPP) or a personal area networking (PAN).

The exchange of the application data can obtain all application data that can be supplied from the second terminal 110, i.e., all application data that cannot be defined in the standards of the Bluetooth as well as all application data defined in the standards of the Bluetooth.

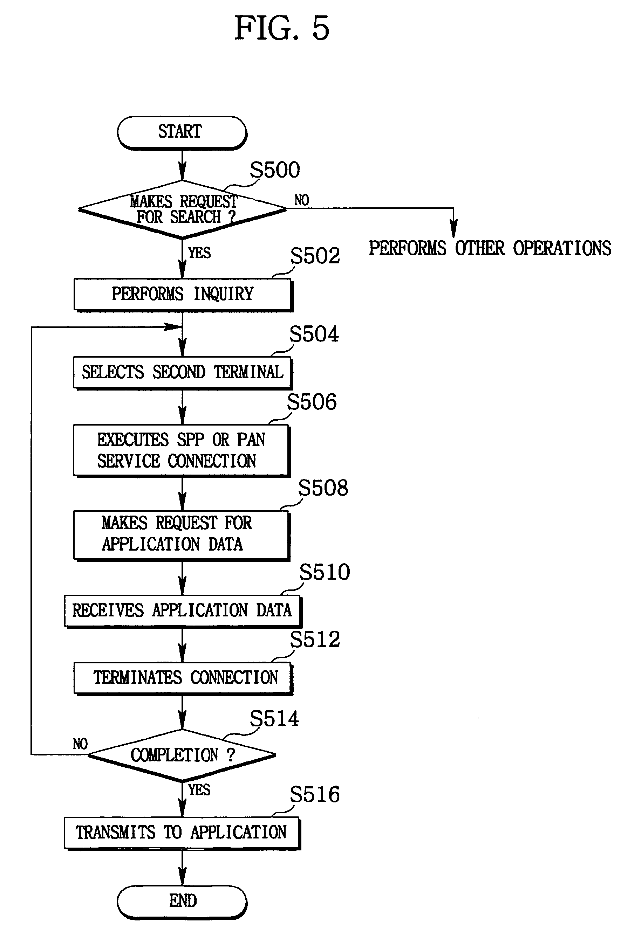

The operation of obtaining application data as explained in FIG. 4 is explained in more detail with reference to a signal flow chart of FIG. 5.

Referring to FIG. 5, if a user operates the first terminal 100 to input a search request (S500), the first terminal 100 performs the inquiry to obtain address information on the plurality of the second terminals 110 that are located in the short distance communication area of the first terminal 100 (S502).

In this state, the first terminal 100 selects one among the searched second terminals 110 (S504), and executes SPP or PAN service connection with the second selected terminal 110 (S506).

If the SPP or PAN service connection is performed, the first terminal 100 requests application data to the second terminal 110 (S508). In response to the request of the application data, the first terminal 100 receives the application data transmitted from second terminal 110 (S510).

The first terminal 100 terminates the connection with the second terminal 110 (S512), and judges whether obtaining application data from all the searched second terminals 110 is completed (S514). As a result of the judgment, if the application data is not obtained from all the second terminals 110, the first terminal 100 repeatedly performs operations for selecting one of the second terminals 110 that does not obtain the application data and for obtaining application data, after the SPP or PAN service connection with the second selected terminal 110.

In addition, as a result of the judgment, if the application data is obtained from all searched second terminals 110, the first terminal 100 transmits the application data obtained from the second terminals 110 to its own application so that the user can check the application data.

The application data, which can be obtained after the first terminal 100 performs the SPP or PAN service connection with the second terminal 110, includes all the application data that are defined and that are not defined as standards in the Bluetooth communication.

However, as described above, in order to enable the first terminal 100 to obtain the application data from the second terminal 110, a connection process for executing the SPP or PAN service connection and an exchange process for requesting and obtaining the application data must be performed. Accordingly, quite a time is required for obtaining the application data.

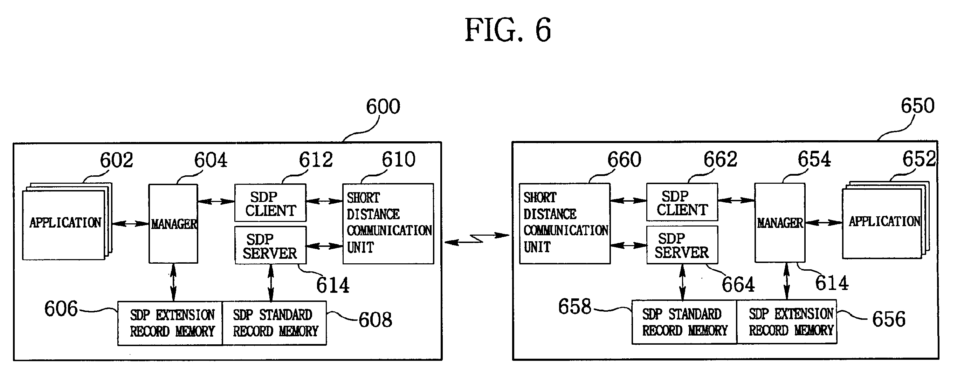

FIG. 6 is a block diagram illustrating the constitution of first and second terminals of an application data obtaining apparatus according to the present invention. Reference numeral 600 is a first terminal 600 just like a mobile communication terminal, and reference numeral 650 is a second terminal just like an access point for providing a predetermined service while performing a short distance communication with the first terminal 600.

The first and second terminals 600 and 650 having the same constitution include applications 602 and 652, managers 604 and 654, SDP extension record memories 606 and 656, SDP standard record memories 608 and 658, short distance communication units 610 and 660, SDP clients 612 and 662, and SDP servers 614 and 664.

The applications 602 and 652, i.e., application programs for performing data exchange between the first terminal 600 and the second terminal 650, include a predetermined game or a walky-talky function, a hands-free function, a wireless headset function, a user interface function, and others.

The managers 604 and 654 process commands related to the applications 602, and 652, and others.

The SDP extension record memories 606 and 656 previously stores a SDP extension record including the application data that are not defined as the standards in the Bluetooth communication, under the control of the managers 604 and 654.

The SDP standard record memories 608 and 658 previously stores a SDP standard record including the application data defined as the standards in the Bluetooth communication.

The short distance communication units 610 and 660 perform the short distance communication such as the Bluetooth communication between the first terminal 600 and the second terminal 650 to exchange all sorts of information.

The SDP client 612 searches for the second terminal 650 located in the short distance communication area of the first terminal 600 through the short distance communication unit 610 to obtain information on the second terminal 650, and the SDP client 662 searches for the first terminal 600 located in the short distance communication area of the second terminal 650 through the short distance communication unit 660 to obtain information on the first terminal 600.

The SDP servers 614 and 664 read the SDP extension record and the SDP standard record, which are respectively stored in the SDP extension record memories 606 and 656, to provide the records through the short distance communication units 610 and 660, if the SDP search request signal is received by the short distance communication units 610 and 660.

According to the present invention, if a search request is inputted by the application 602 of the first terminal 600, the manager 604 transmits the search request to the SDP client 612.

The SDP client 612 performs the inquiry through the short distance communication unit 610 according to the search request to search for the second terminals 650 located in the short distance communication area and obtain address information on the second terminals 650.

If the plurality of the second terminals 650 is searched for from the inquiry, the SDP client 612 selects the plurality of second terminals 650 one by one, and transmits a SDP search request signal to the second selected terminal 650 through the short distance communication unit 610.

The short distance communication unit 660 of the second terminal 650 receives the SDP search request signal transmitted from the first terminal 600 and transmits the received request signal to the SDP server 668. The second SDP server 668 reads the SDP extension record and the SDP standard record, which are respectively stored in the SDP extension record memory 656 and the SDP standard record memory 658, according to the inputted SDP search request signal, and transmits the read SDP extension record and SDP standard record to the first terminal 600 through the short distance communication unit 660.

The SDP extension record and SDP standard record transmitted from the second terminal 650 are received by the first terminal 600 through the short distance communication unit 610 and inputted to the SDP client 612. Then, the SDP client 612 performs filtering and extracting operations of application data from the inputted SDP extension record and SDP standard record.

As such, if the obtainment of the application data from one of the second searched terminals 650 is completed, the SDP client 612 performs an operation of transmitting the SDP search request signal repeatedly by selecting the other searched second terminals 650 one by one, and an operation of extracting application data by receiving the SDP extension record and the SDP standard record.

If the obtainment of the application data from all the searched second terminals 650 is completed, the SDP client 612 transmits the obtained application data through the manager 604, so that the user can check the application data.

Moreover, since operations that the second terminal 650 obtains the application data from the first terminal 600 are preformed on the contrary to the above described explanation, detailed explanation thereto will be omitted.

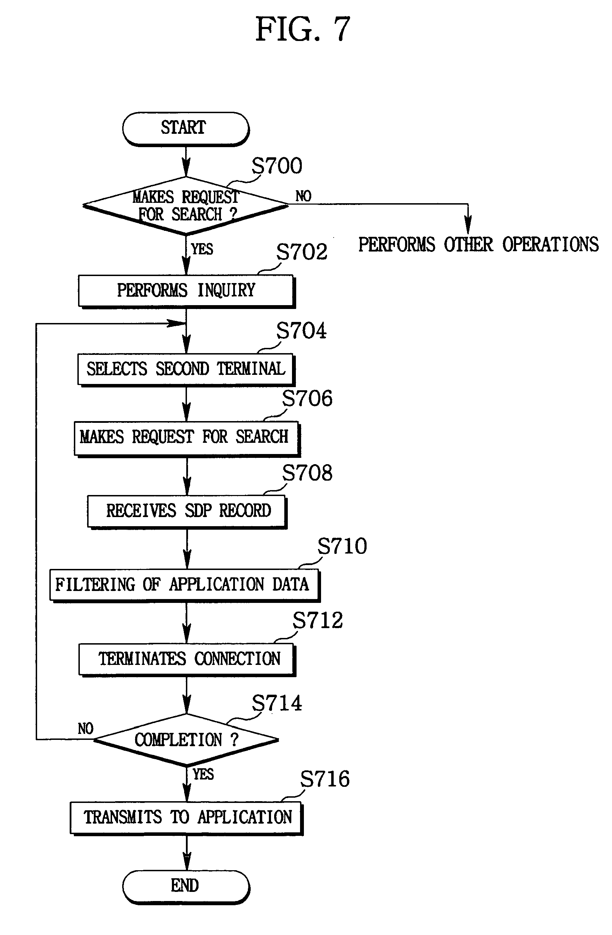

Now, referring to FIG. 7, it is judged whether a search request is inputted to the SDP client 612 from the applications 602 of the first terminal 600 through the manager 604 (S700).

As a result of the judgment, if it is judged that the search request is inputted, the SDP client 612 performs the inquiry through the short distance communication unit 610 to search for the second terminals 650 located in its own short distance communication area and obtains address information on the second terminals 650 (S702).

If the second terminal 650 is searched for, the SDP client 612 selects one of the second terminals 650 (S704), and transmits a SDP search request signal to the second selected terminal 650 through the short distance communication unit 610 (S706).

The transmitted SDP search request signal is received by the short distance communication unit 660 of the second terminal 650 and transmitted to the SDP server 664. The SDP server 664 reads the SDP extension record and SDP standard record, which are stored in the SDP extension record memory 656 and the SDP standard record memory 658, according to the SDP search request signal, and transmits the read SDP extension record and SDP standard record to the first terminal 600 through the short distance communication unit 660.

The first terminal 600 receives the SDP extension record and SDP standard record transmitted from the second terminal 650 (S708), and transmits the received records to the SDP client 612. Then, the SDP client 612 performs the filtering and extracting operations of application data from the SDP extension record and SDP standard record (S710).

The first terminal 600 terminates the connection with the second selected terminal 650 (S712), and judges whether the obtainment of the application data from all of the second searched terminals 650 is completed (S714).

As a result of the judgment, if the obtainment of the application data from the second terminals 650 is not completed, the SDP client 612 repeatedly performs operations for selecting other second searched terminals 650 to transmit the SDP search request signal, and for receiving the SDP extension record and SDP standard record from the second selected terminal 650 to extract application data.

If the obtainment of the application data from the searched second terminals 650 is completed, the SDP client 612 transmits the obtained application data to the application 602 through the manager 604, so that the user can check the application data (S716).

According to the present invention, the second terminal 650 can obtain information on applications, which can be supplied from the first terminal 600, by searching for the first terminal 600 and by transmitting the SDP search request signal to the searched first terminal 600. Since an operation of enabling the second terminal 650 to obtain information on applications from the first terminal 600 is the same as that of obtaining information on applications from the second terminal 660, the detailed explanation thereto will be omitted.

As described above, according to the present invention, the first and second terminals respectively include the SDP standard record memory and SDP extension record memory. The SDP extension record memory stores the SDP extension record including the application data that is not defined as the standards in the Bluetooth communication, and the SDP standard record memory stores the SDP standard record including the application data that is defined as the standards in the Bluetooth communication. If the first terminal obtains the application data from the second terminal, the first terminal transmits the SDP search request signal to the second terminal. According to the SDP search request signal, the second terminal provides the SDP extension record and the SDP standard record, which are stored in the SDP extension record memory and the SDP standard record memory, to the first terminal. The first terminal extracts the application data from the SDP extension record and the SDP standard record that are supplied by the second terminal.

Therefore, if the first terminal obtains the application data of the second terminals, the first terminal can obtain the application data in the search process for SDP, without performing a process for requesting and obtaining the application data after executing the SPP or PAN service connection, thereby reducing the time necessary for obtaining the application data. As a result thereof, the user can search for the second terminal for supplying his/her desired applications in a short time and connect with the second terminal via the short distance communication.

It should be understood by those of ordinary skill in the art that various replacement, modifications and changes in the form and details may be made therein without departing from the sprit and scope of the present invention as defined by the following claims. Therefore, it is to be appreciated that the above described embodiments are for purpose of illustration only and are not to be construed as limitations of the invention.

## Claims

1. An apparatus for obtaining application data from a short distance communication terminal, comprising:
a SDP extension record memory for storing a SDP extension record including application data that are not be defined as standards in a short distance communication;
a SDP standard record memory for storing a SDP standard record including application data that are defined as standards in a short distance communication;
a short distance communication unit for performing a short distance communication;
a SDP client for searching for a terminal through the short distance communication unit to obtain information including application data that can be supplied from the searched terminal; and
a SDP server for reading the SDP extension record and the SDP standard record, which are respectively stored in the SDP extension record memory and the SDP standard record memory, so as to be transmitted through the short distance communication unit, if a SDP search request signal is received through the short distance communication unit.

2. The apparatus of claim 1, further comprising:
an application; and
a manager for processing a command related to the application;
wherein the SDP extension record including application data, which are not defined as standards in the short distance communication, is stored in the SDP extension record memory under the control of the manager.

3. The apparatus of claim 1, wherein the search for the terminal of the SDP client is performed by an inquiry through the short distance communication unit.

4. The apparatus of claim 1, wherein the obtainment of information including application data of the SDP client is performed by filtering the SDP extension record and the SDP standard record that are received through the short distance communication unit from a relevant terminal according to the search request for SDP.

5. The apparatus of claim 1, wherein the short distance communication unit is one of Ultra Wide Band (UWB) communication, Bluetooth, Wireless Local Area Network (WLAN), Zigbee and Infrared Data Association (IrDA).

6. A method for obtaining application data from a short distance communication terminal, comprising:
a SDP client of the first terminal searching for a second terminal to transmit a SDP search request signal;
receiving a SDP standard record and a SDP extension record supplied from the second terminal according to the SDP search request signal; and
extracting the application data from the received SDP standard record and SDP extension record.

7. The method of claim 6, wherein the search for the second terminal is performed, if a search command is inputted through the manager from the application.

8. The method of claim 6, wherein the search for the second terminal is performed by performing an inquiry in Bluetooth communication.

9. The method of claim 6, wherein if the plurality of second terminals are searched for, the second searched terminals are sequentially selected one by one, to transmit the SDP search request signal.

10. The method of claim 6, further comprising enabling the SDP client to transmit the extracted application data to the application.

11. The method of claim 6, further comprising:
Enabling the SDP server of the first terminal to read the SDP standard record and the SDP extension record from the SDP standard record memory and the SDP extension record memory if the SDP search request signal is received from the second terminal to the first terminal; and
transmitting the read SDP standard record and SDP extension record via the short distance communication.
